## Europäisches Patentamt

## European Patent Office

## Office européen des brevets

(11) Veröffentlichungsnummer: **0 012 741**
**B1**

(12) **EUROPÄISCHE PATENTSCHRIFT**

(45) Veröffentlichungstag der Patentschrift:
04.11.81

(51) Int. Cl.³: **B 23 K 11/36**, B 25 J 9/00

(21) Anmeldenummer: **79890064.3**

(22) Anmeldetag: **17.12.79**

(54) **Schweissautomat.**

(30) Priorität: **18.12.78 AT 9026/78**

(43) Veröffentlichungstag der Anmeldung:
**25.06.80 Patentblatt 80/13**

(45) Bekanntmachung des Hinweises auf die Patenterteilung:
**04.11.81 Patentblatt 81/44**

(84) Benannte Vertragsstaaten:
**BE CH DE FR GB IT LU NL SE**

(56) Entgegenhaltungen:
**DE-A-1 922 714**
**FR-A-1 525 345**
**FR-A-2 283 760**
**GB-A-7 814 465**
**US-A-3 709 379**

(73) Patentinhaber: **IGM - Industriegeräte- und Maschinenfabriks-gesellschaft mbH, Industriezentrum NÖ-Süd Strasse 2a, Halle M8, Wiener Neudorf, Niederösterreich (AT)**

(72) Erfinder: **Vokurka, Franz, Minorgasse 60, A-1140 Wien (AT)**

(74) Vertreter: **Beer, Otto, Dipl.-Ing. et al, Lindengasse 8, A-1071 Wien (AT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Schweißautomat

Die Erfindung betrifft einen Schweißautomat mit einer vorzugsweise lotrechten Säule, an der ein Träger sowohl in Richtung seiner Längsachse als auch in einer hierzu senkrecht und parallel zur Längsachse der Säule verlaufenden Richtung verschiebbar geführt ist, wobei die Säule gegebenenfalls um ihre Längsachse verdrehbar gelagert ist.

Die zur Zeit bekannten Schweißautomaten, wie sie für die Schutzgas- und Widerstandsschweißung verwendet werden, sind in bezug auf ihre Leistungsfähigkeit gegenüber Sonderschweißmaschinen oft im Nachteil, da sie mit nur einer Schweißpistole oder Schweißzange ausgerüstet werden können.

Ein Manipulator mit einem Greifer, der auf einem Arm verdrehbar, jedoch nicht verschiebbar angeordnet ist, ist aus der DE-OS 1 922 714 bekannt. Der den Greifer tragende Arm dieses Manipulators ist in seiner Längsrichtung verschiebbar an einem weiteren Arm gelagert, der seinerseits verschiebbar an einer heb- und senkbaren lotrechten Säule geführt ist. Nachteilig bei diesem Manipulator ist die verschiebbare Lagerung des den Greifer tragenden Armes, da wegen des unvermeidlichen Spiels, insbesondere bei voll ausladendem Arm, erhebliche Positionierungsungenauigkeiten auftreten können.

Ausgehend von diesem Stand der Technik liegt der Erfindung die Aufgabe zugrunde, einen Schweißautomaten zu schaffen, der hinsichtlich seiner Einsatzmöglichkeiten und seiner Leistungsfähigkeit den bekannten, mit nur einer Schweißpistole arbeitenden Schweißautomaten überlegen ist, ohne daß der konstruktive Aufwand so groß ist wie bei gleichzeitigem Einsatz von zwei oder mehr Schweißautomaten.

Erfindungsgemäß wird dies bei einem Schweißautomaten der eingangs genannten Gattung dadurch erreicht, daß mit einem Ende des Trägers ein Balken starr verbunden ist, dessen Längsachse sowohl zur Längsachse der Säule als auch zu der des Trägers senkrecht verläuft, daß am Balken mindestens zwei parallel zur Längsachse verschiebbar geführte, an sich bekannte Halterungen für Schweißpistolen oder Schweißzangen vorgesehen sind, daß für jede Halterung ein Antrieb für deren Verschiebung entlang dem Balken vorgesehen ist und daß für jede Halterung in an sich bekannter Weise weitere Antriebe zum Bewegen derselben, nämlich zum Verschwenken der Halterungen, zum Beugen und zum Verdrehen der Schweißköpfe oder Schweißzangen vorgesehen sind, wobei gegebenenfalls mechanische oder elektronische Einrichtungen zum Kuppeln der einer Halterung zugeordneten Antriebe mit den Antrieben mindestens einer weiteren Halterung für das Ausführen parallel oder symmetrisch zueinander verlaufender Schweißnähte vorgesehen sind.

Die erfindungsgemäße Ausbildung bietet erhebliche Vorteile. Einmal kann der Schweißautomat zum gleichzeitigen Schweißen verschieden verlaufender Nähe verwendet werden. Besondere Vorteile ergeben sich aber beim Schweißen von in der Praxis sehr häufig vorkommenden, gleich verlaufenden, symmetrischen oder in sich geschlossenen, z. B. kreisrunden Nähten. Diese Vorteile liegen u. a. im — verglichen mit dem gleichzeitigen Einsatz zweier Automaten — wesentlich kleineren Aufwand beim Programmieren. Dies, weil die Halterungen wegen der miteinander mechanisch oder elektronisch kuppelbaren Antriebe um gleiche Wegstrecken in entgegengesetzten oder gleichen Richtungen verschiebbar und verschwenk-, verdreh- sowie beugbar sind. Hierdurch können die Halterungen auf dem Balken gleichläufig (parallel) oder gegenläufig zueinander verschoben werden. Es können also Werkstücke mit symmetrischen Schweißnähten mit zwei Pistolen gleichzeitig verschweißt werden, wobei die Programmierung des beispielsweise von einem Rechner in Verbindung mit einem Speicher gesteuerten Schweißautomaten nur auf eine Werkstückhälfte mit einer Pistole erfolgen muß. Hierdurch kann Programmierzeit und Speicherkapazität des Rechners eingespart werden. Sinngemäßes gilt für die Verschweißung von Werkstücken mit parallel zueinander verlaufenden Schweißnähten. Weiter besteht die Möglichkeit, durch die gleichläufige Verschiebung der beiden Halterungen zwei gleiche Werkstücke, die nebeneinander angeordnet sind, gleichzeitig zu schweißen. Durch einen zusätzlichen Positionsspeicher kann man außerdem die Halterungen wahlweise auf spiegelbildlichen oder gleichbildlichen Ablauf programmieren. Beim Schweißen in sich geschlossener Nähte erlaubt es der erfindungsgemäße Schweißautomat, daß die Schweißpistolen vom gleichen Anfangspunkt ausgehend die Naht in entgegengesetzten Richtungen schweißen, so daß die Schweißnaht keinen »Anfang« und kein »Ende« besitzt. Dies, weil die Schweißung in einem gemeinsamen Bad schmelzflüssigen Metalls beginnt und in einem gemeinsamen Bad endet. Dies ergibt eine qualitativ besonders gute Schweißnaht.

Der Umstand, daß der die Halterungen für die Schweißpistolen oder -zangen tragende Balken mit dem Träger starr verbunden ist, ergibt bei praktisch gleichem Bewegungsspielraum — gleiche Länge der Balken vorausgesetzt — gegenüber der Anordnung gemäß der DE-OS 1 922 714 eine wesentlich bessere Stabilität und damit eine höhere Positionierungsgenauigkeit. Dies jedoch ohne Beschränkung der Bewegungsmöglichkeiten, weil der Balken, auf dem die Halterungen für Schweißpistolen oder Schweißzangen verschiebbar sind, beim Bewegen der Säule und des Trägers mitbewegt wird.

Durch die besondere Konstruktion des erfindungsgemäßen Schweißautomaten besteht die Möglichkeit, mit zwei oder mehr Schweißpistolen oder Schweißzangen gleichzeitig zu arbeiten. Hierdurch ergeben sich in der praktischen Anwendung für die Industrie weitere Möglichkeiten, die Fertigungskosten zu vermindern. Auch dadurch, daß in vielen Fällen für beide Köpfe nur eine Programmierung vorgenommen werden muß, ergibt sich eine erhebliche Zeiteinsparung und ein wirtschaftlicher Einsatz des erfindungsgemäßen Schweißautomaten.

Weitere Einzelheiten der Erfindung ergeben sich aus der Beschreibung des in der Zeichnung schematisch wiedergegebenen Ausführungsbeispiels. Es zeigt

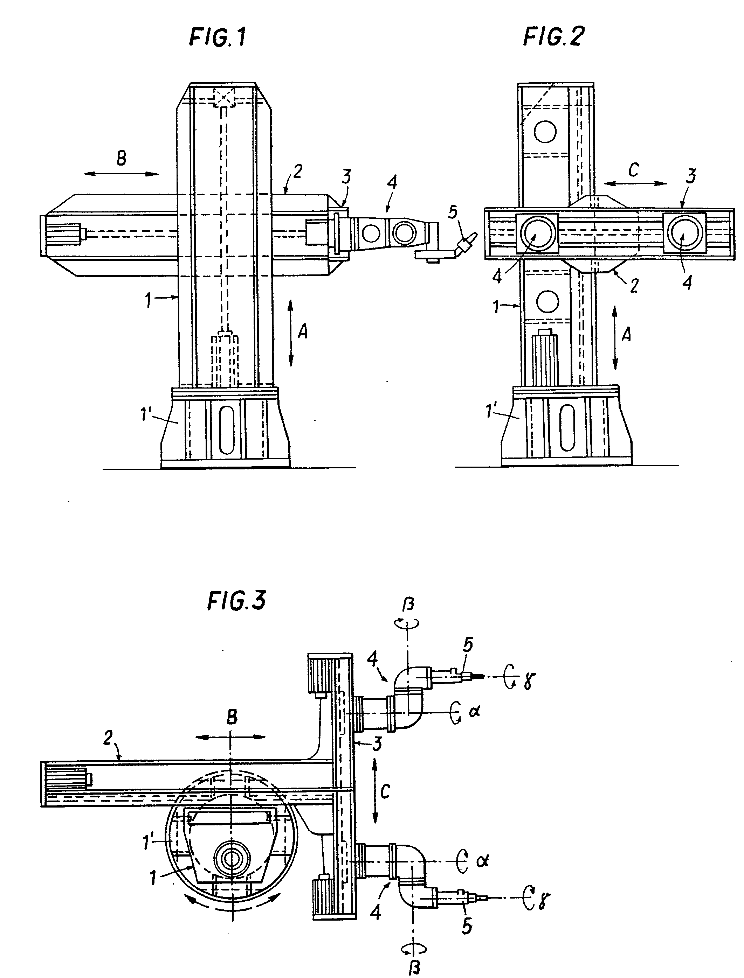

Fig. 1 einen Schweißautomaten in Ansicht von der Seite,

Fig. 2 einen Schweißautomaten in Vorderansicht und

Fig. 3 den Schweißautomaten in Draufsicht.

Der Schweißautomat besteht aus einer Säule 1, die auf einem Sockel 1' drehbar gelagert und lotrecht ausgerichtet sein kann. An dieser Säule 1 ist ein Träger 2 in Richtung der lotrechten Bewegungslinie A verschiebbar geführt. Zusätzlich ist der Träger 2 gegenüber der Säule 1 in Richtung der waagrechten Bewegungslinie B verschiebbar. Mit dem einen Ende des Trägers 2 ist ein Balken 3 starr verbunden, an dem zwei Halterungen 4 in Richtung der Längserstreckung des Balkens 3 (Bewegungslinie C) verschiebbar geführt sind.

Die Halterungen 4 tragen jeweils eine Schweißpistole 5 und können um die Gelenkachse (α) verschwenkt und um die Gelenkachse (β) gebeugt werden. Zusätzlich können die Schweißpistolen 5 um eine Achse (γ) verdreht werden.

Zur Ausführung der verschiedenen Bewegungen des erfindungsgemäßen Schweißautomaten können an sich übliche Gleichstrommotoren und/oder pneumatische Antriebe vorgesehen sein.

Insbesondere für die Bewegung in Richtung der Bewegungslinien A, B und C bewähren sich Gleichstrommotoren, wogegen für Bewegungen der Halterungen pneumatische oder elektrische Antriebe vorgesehen sind. Da die Ausführung der Antriebe als solche für die Erfindung nicht wesentlich ist, wird auf weitere Einzelheiten nicht eingegangen.

Wesentlich ist bloß, daß am Balken 3 zwei oder mehrere Halterungen 4 für die Schweißpistolen 5 oder Schweißzangen in Richtung der Bewegungslinie C verschiebbar vorgesehen sind. Die Antriebe zur Verschiebung der Halterungen 4 können voneinander unabhängige Antriebe sein, die von getrennten Positionsspeichern gesteuert werden können. Diese Ausführungsform wird man wählen, wenn Teile zu verschweißen sind, deren Nähte unsymmetrisch und zueinander nicht parallel verlaufen.

Die Antriebe für die Verschiebung der Halterungen 4 entlang des Balkens 3, die Antriebe für das Verschwenken und Beugen der Halterungen und schließlich die Antriebe für das Verdrehen der Schweißpistolen 5 oder Schweißzangen können aber auch durch einen einzigen Positionsspeicher gesteuert werden. Die Steuerung kann dabei so erfolgen, daß die Bewegungsbahnen der Schweißpistolen 5 spiegelbildlich verlaufen. Hierbei bewährt es sich, wenn das Verschwenken (α) und Verdrehen (γ) vom Rechner für den zweiten Kopf jeweils spiegel- oder gleichbildlich, das Beugen (β) hingegen immer gleichbildlich gesteuert werden.

Sollen mit dem erfindungsgemäßen Schweißautomaten parallel zueinander verlaufende Nähte, die auf einem oder auf zwei getrennten Werkstücken liegen, verschweißt werden, dann kann die Ansteuerung der Antriebe für den zweiten Schweißkopf auch unter Zwischenschaltung eines Festwertspeichers über das für den anderen Schweißkopf eingespeicherte Programm erfolgen.

## Patentanspruch

Schweißautomat mit einer vorzugsweise lotrechten Säule (1), an der ein Träger (2) sowohl in Richtung seiner Längsachse als auch in einer hierzu senkrecht und parallel zur Längsachse der Säule (1) verlaufenden Richtung verschiebbar geführt ist, wobei die Säule (1) gegebenenfalls um ihre Längsachse verdrehbar gelagert ist, dadurch gekennzeichnet, daß mit einem Ende des Trägers (2) ein Balken (3) starr verbunden ist, dessen Längsachse (Bewegungslinie C) sowohl zur Längsachse der Säule (1) als auch zu der des Trägers (2) senkrecht verläuft, daß am Balken (3) mindestens zwei parallel zur Längsachse (Bewegungslinie C) verschiebbar geführte, an sich bekannte Halterungen (4) für Schweißpistolen (5) oder Schweißzangen vorgesehen sind, daß für jede Halterung (4) ein Antrieb für deren Verschiebung (Bewegungslinie C) entlang dem Balken (3) vorgesehen ist und daß für jede Halterung (4) in an sich bekannter Weise weiter Antriebe zum Bewegen derselben, nämlich zum Verschwenken (Achse α) der Halterungen (4), zum Beugen (Achse β) und zum Verdrehen (Achse γ) der Schweißköpfe (5) oder Schweißzangen vorgesehen sind, wobei gegebenenfalls mechanische oder elektronische Einrichtungen zum Kuppeln der einer Halterung (4) zugeordneten Antriebe mit den Antrieben mindestens einer weiteren Halterung (4) für das Ausführen parallel oder symmetrisch zueinander verlaufender Schweißnähte vorgesehen sind.

## Claim

Automatic welding machine comprising a preferable vertical column (1), on which a carrier (2) is moveably guided in the direction of its longitudinal axis as well as in a direction perpendicularly thereto and parallel to the longitudinal axis of the column (1), whereby the column (1) is optionally rotatably mounted around its longitudinal axis, characterized in that a beam (3) is rigidly connected with the carrier (2), the longitudinal axis (line of movement C) of the beam (3) being perpendicular to the longitudinal axis of the column (1) and to that of the carrier (2), that are provided on the beam (3) at least two holders (4) known per se for welding guns (5) or pincher guns displaceably guided parallel to the longitudinal axis (line of movement C), that a drive is provided for each holder (4) for its displacement (line of movement C) on the beam and that further drives known per se are provided for each holder (4) for moving those, i.e. for swinging (axis $\alpha$) of the holders (4), for deflecting (axis $\beta$) and for the rotation (axis $\gamma$) of the welding heads (5) or pincher guns whereby optionally mechanical or electronical means are provided for coupling the drives coordinated to a holder (4) with the drives of at least one further holder (4) for executing welding seams which run parallel or symmetrically to each other.

## Revendication

Machine automatique de soudage comprenant une colonne (1), de préférence verticale, sur laquelle une poutre (2) est montée mobile en translation aussi bien suivant son axe longitudinal que suivant une direction à la fois perpendiculaire à son axe longitudinal et parallèle à l'axe longitudinal de la colonne (1), ladite colonne (1) étant, le cas échéant, montée mobile en rotation autour de son axe longitudinal, caractérisée par le fait qu'à une extrémité de la poutre (2) est reliée rigidement une poutrelle (3) dont l'axe longitudinal (ligne de mouvement C) est perpendiculaire à la fois à l'axe longitudinal de la colonne (1) et à l'axe longitudinal de la poutre (2), que sur la poutrelle (3) sont prévus au moins deux supports (4) connus en soi pour des pistolets de soudage (5) ou des pinces de soudage, lesdits supports étant mobiles en translation parallèlement à l'axe longitudinal de la poutrelle (ligne de mouvement C), que pour chaque support (4) est prévue une commande pour le déplacement en translation (ligne de mouvement C) du support le long de la poutrelle (3) et que pour chaque support (4) sont prévues, de façon connue en soi, des commandes supplémentaires pour le déplacement des supports, à savoir pour le pivotement (axe $\alpha$) des supports (4), pour l'inclinaison (axe $\beta$) et pour la rotation (axe $\gamma$), des têtes de soudage (5) ou pinces de soudage, des dispositifs mécaniques ou électroniques étant le cas échéant prévus pour coupler les commandes associées à l'un des supports (4) avec les commandes d'au moins un support supplémentaire (4), en vue de l'exécution de soudures d'allures parallèles ou symétriques.

FIG.1

FIG.2

FIG.3